# EUROPEAN PATENT APPLICATION

(11) **EP 4 101 551 A1**
(43) Date of publication of application: **14.12.2022**
(21) Application number: 20917426.7
(22) Date of filing: 07.02.2020
(51) Int. Cl.: B09B 3/00

(54) **RECYCLING SYSTEM FOR GENERAL WASTE INCLUDING WASTE PLASTIC, RECYCLING METHOD FOR GENERAL WASTE, AND FAR-INFRARED CATALYTIC REDUCTION APPARATUS FOR USE IN RECYCLING SYSTEM FOR GENERAL WASTE**

(71) Applicant: Takemura, Kotaro, Tokyo 140-0011 (JP)
(72) Inventor: KUBOTA, Toru, Kodama-gun Saitama 369-0316 (JP)
(74) Representative: Elzaburu S.L.P.
(86) International application number: PCT/JP2020/004972
(87) International publication number: WO 2021/157088

(57) **Abstract**

The present invention provides a system for recycling general waste capable of obtaining a recycled material product by rendering harmless and stabilizing harm metals in general waste containing waste plastic with a synergistic effect of catalysis and far infrared electromagnetic waves after a pretreatment step.

Solution

The system for recycling general waste according to the present invention includes a to-be-treated material pit 2 that stores a to-be-treated material, a catalysis crusher 3 that crushes, on the basis of catalyst addition, part of the material, a primary dryer 6 that performs primary-drying of the material supplied from the catalysis crusher to reduce the volume, a powder pulverizer 9 that pulverizes part of the primary-dried material, and allows incineration ash rendered harmless to be input thereinto, a raw material tank 11 that stores the powder-pulverized material, a secondary dryer 13 that performs secondary-drying of the material from the raw material tank to further reduce the volume, and a far infrared radiation catalytic reduction device 21 that is configured capable of generating far infrared electromagnetic waves that are generated from heated ceramics, and that is supplied with the secondary-dried material, and is further supplied with the incineration ash rendered harmless through the powder pulverizer, the raw material tank, and the secondary dryer, and that renders harmless and stabilizes harm metals in the material with a synergistic effect of catalysis based on a substance contained in the incineration ash and the far infrared electromagnetic waves to obtain a recycled material.

## Description

### Technical field

The present invention relates to a system for recycling general waste capable of obtaining a recycled material product by rendering harmless and stabilizing harm metals in general waste containing waste plastic as a to-be-treated material (hereinafter referred to as "general waste") with a synergistic effect of catalysis and far infrared electromagnetic waves after a pretreatment step, a method for recycling general waste, and a far infrared radiation catalytic reduction device used with the system for recycling general waste.

### Background art

Conventionally, general waste is generally treated by means of incineration and its subsequent landfill.

In fact, incineration ash that contains harm metals generated by incinerating general waste is an exceptional material resource. This is because such incineration ash is a mixture and aggregate of as many as 30 or more metal elements as a result of incineration of various substances.

In order to recycle these metals, harm metals must be rendered harmless to be converted into a safe and stable material. A treatment step must also be economical with less environmental load.

Standard legal disposal of incineration ash is landfill because it contains harmful substances such as dioxins and heavy metals.

However, disposal sites can be filled with treated incineration ash according to conventional treatment approaches, and its use is thus permitted as cement additives. It is uncertain whether such a reuse is a proper solution or not. Heavy metals, even if contained in minute quantities, are not sufficiently stabilized only by their incineration together with cement at high temperatures without rendering harmless substances containing such heavy metals.

Patent Document 1 discloses a treatment method of contaminant that obtains recyclable carbide by treating the contaminant by performing a pretreatment step, a charring carbonization step using a carbonization oven, and a cooling step in a construction having a whole system connected with ducts and a closed structure with little contact with the outside air.

Patent Document 2 discloses a treatment method for rendering harmless ashes after incinerating general waste, i.e., a method for treating incineration ashes including a step for complete combustion of uncombusted materials in incineration ashes by heating general incineration ashes of municipal refuse composed of discharged fly ashes and main ashes, subsequently a step for enlarging the surface area by a crushing treatment, and thereafter a treatment step for maintaining the heating temperature of 400 to 600 °C and the carbonization time of 40 to 60 minutes in a space in a deoxygenated state insulated from the outside air.

Patent Document 3 discloses a method for recycling incinerated ash, including mixing incinerated ash with carbonized material obtained by carbonizing organic waste under dry distillation conditions in a reducing atmosphere, turning metals contained in the incinerated ash into slightly soluble metal compounds, imparting catalytic activity and adsorptive power to the metal compounds, and refabricating the carbonized material into activated carbon.

Unfortunately, none of the above-described Patent Documents 1 to 3 discloses a technology of rendering harmless and stabilizing harm metals in a to-be-treated material with a synergistic effect of catalysis and far infrared electromagnetic waves to obtain a recycled material.

### Prior art document

### Patent document

[Patent Document 1] Japanese Patent No. 4599127
[Patent Document 2] Japanese Patent No. 3971813
[Patent Document 3] Japanese Patent No. 3840494

### Summary of the invention

### Technical problem

The present invention, developed in view of the above conventional technologies, provides a system for recycling general waste capable of obtaining a recycled material product by rendering harmless and stabilizing harm metals in general waste (to-be-treated material) with a synergistic effect of catalysis and far infrared electromagnetic waves after a pretreatment step, a method for recycling general waste, and a far infrared radiation catalytic reduction device used with the system for recycling general waste.

### Solution to problem

The system for recycling general waste (to-be-treated material) according to the present invention has the dominant feature of including a to-be-treated material pit that stores a to-be-treated material, a catalysis crusher that crushes, on the basis of catalyst addition, part of the material from the to-be-treated material pit, a primary dryer that performs primary-drying of the material supplied from the catalysis crusher to reduce the volume, a powder pulverizer that pulverizes part of the primary-dried material, and allows incineration ash rendered harmless to be input thereinto, a raw material tank that stores the powder-pulverized material, a secondary dryer that performs secondary-drying of the material from the raw material tank to further reduce the volume, and a far infrared radiation catalytic reduction device that is configured capable of generating far infrared electromagnetic waves that are generated from heated ceramics, and that is supplied with the secondary-dried material, and is further supplied with the incineration ash rendered harmless through the powder pulverizer, the raw material tank, and the secondary dryer, and that renders harmless and stabilizes harm metals in the material with a synergistic effect of catalysis based on a substance contained in the incineration ash and the far infrared electromagnetic waves to obtain a recycled material.

### Advantageous effects of invention

The invention according to claim 1 can achieve and provide a system for recycling general waste capable of obtaining a reusable product based on general waste without incinerating the general waste because it is configured to render harmless and stabilize harm metals in a to-be-treated material with a synergistic effect of catalysis of incineration ash rendered harmless conveyed into a far infrared radiation catalytic reduction device and far infrared electromagnetic waves after reducing the volume of the material to the minimum level by primary-drying, crushing, pulverizing and secondary-drying using the catalysis of the incineration ash rendered harmless to obtain a recycled material.

The invention according to claim 2 can achieve and provide a system for recycling general waste that releases no harmful gas (pollution-free) because together with the effect of the invention according to claim 1, it can store a recycled to-be-treated material product using a product storage tank, convey it to the outside, release exhaust gas to the outside by exhaust gas treatment equipment, and screw conveyors with a duct that release no harmful gas to the outside are further arranged between components.

The invention according to claim 3 can achieve and provide a system for recycling general waste capable of efficient use of exhaust heat because together with the effect of the invention according to claim 1 or 2, it uses the heat generated by a treatment in the far infrared radiation catalytic reduction device to utilize exhaust heat for a primary dryer.

The invention according to claim 4 can achieve and provide a system for recycling general waste capable of using metal substances contained in incineration ash rendered harmless as a catalyst together with the effect of the invention according to any one of claims 1 to 3.

The invention according to claim 5 can achieve and provide a method for recycling general waste capable of obtaining a reusable product based on general waste without incinerating the general waste because it includes a pretreatment step for using catalysis of incineration ash rendered harmless to reduce the volume of a to-be-treated material to the minimum level by primary-drying, crushing, pulverizing, and secondary-drying the material and a step for recycling the material by allowing the far infrared radiation catalytic reduction device to render harmless and stabilize harm metals.

The invention according to claim 6 can achieve and provide a method for recycling general waste capable of also using metal substances contained in incineration ash rendered harmless as a catalyst together with the effect of the invention according to claim 5.

The invention according to claim 7 can achieve and provide a far infrared radiation catalytic reduction device capable of obtaining a recycled material that, on the basis of a to-be-treated material that has undergone the pretreatment step for significantly reducing the volume of the material composed of general waste by primary-drying, crushing, pulverizing, and secondary-drying the material, and conveying incineration ash rendered harmless, renders harmless and stabilizes harm metals with a synergistic effect of catalysis and far infrared electromagnetic waves generated from ceramics, the device including: a far infrared radiation catalytic reduction device main body that has refractory bricks containing ceramics such as alumina laid throughout an inner wall thereof; a base that supports the far infrared radiation catalytic reduction device main body; and a discharge hopper that is disposed within the base, has refractory bricks containing ceramics laid throughout an inner wall thereof, and is configured to discharge the far infrared radiation catalysis reduced material from the bottom, in which the refractory bricks are heated by a heating burner to generate far infrared radiation from the ceramics.

The invention according to claim 8 can achieve and provide a far infrared radiation catalytic reduction device capable of using metal substances contained in incineration ash rendered harmless as a catalyst because together with the effect of the invention according to claim 7, it is configured, as the catalyst, to use a metal catalyst obtained from the incineration ash rendered harmless, a semiconductor oxide catalyst, an oxide catalyst, and a sulfide catalyst.

### Brief description of drawings

[FIG.1] FIG. 1 is a plan view illustrating the overall schematic configuration of a system for recycling general waste according to Example 1 of the present invention;
[FIG.2] FIG. 2 is a plan view illustrating the overall schematic arrangement configuration sample of the system for recycling general waste according to this Example 1;
[FIG.3] FIG. 3 is a schematic front view illustrating an infrared radiation catalytic reduction device used with the system for recycling general waste according to Example 2 of the present invention;
[FIG.4] FIG. 4 is a schematic side view illustrating the far infrared radiation catalytic reduction device according to this Example 2;
[FIG.5] FIG. 5 is a schematic plan view illustrating the far infrared radiation catalytic reduction device according to this Example 2;
[FIG.6] FIG. 6 is a cross-sectional view along the A-A line in FIG. 4;
[FIG.7] FIG. 7 is a cross-sectional view along the B-B line in FIG. 4;
[FIG.8] FIG. 8 is a cross-sectional view along the C-C line in FIG. 4;
[FIG.9] FIG. 9 is a partially enlarged view illustrating a punching metal plate in the far infrared radiation catalytic reduction device according to this Example 2; and
[FIG.10] FIG. 10 is an explanatory drawing of a treatment of recycling harmful substances using the system for recycling general waste according to Example 1 of the present invention (i.e., explanatory drawing of the system for recycling general waste according to the far infrared radiation catalysis reduction reaction principle).

### Description of embodiments

The present invention achieved an objective to provide a system for recycling general waste capable of obtaining a recycled material product by rendering harmless and stabilizing harm metals in general waste (to-be-treated material) with a synergistic effect of catalysis and far infrared electromagnetic waves after a pretreatment step, including a to-be-treated material pit that stores a to-be-treated material, a catalysis crusher having a magnetic separator that crushes, on the basis of catalyst addition, part of the material, the catalysis crusher being coupled with the to-be-treated material pit through a screw conveyor with a duct that releases no harmful gas to the outside, a primary dryer that performs primary-drying of the material supplied from the catalysis crusher to reduce the volume, the primary dryer being coupled with the catalysis crusher through a screw conveyor with a duct that releases no harmful gas to the outside, a powder pulverizer that pulverizes part of the primary-dried material, the powder pulverizer being coupled with the primary dryer through a screw conveyor with a duct that releases no harmful gas to the outside, and allows incineration ash rendered harmless to be input thereinto, a raw material tank that stores the pulverized material, the raw material tank being coupled with the powder pulverizer through a screw conveyor with a duct that releases no harmful gas to the outside, a secondary dryer that performs secondary-drying of the material from the raw material tank to further reduce the volume, the secondary dryer being coupled with the raw material tank through a screw conveyor with a duct that releases no harmful gas to the outside, a far infrared radiation catalytic reduction device that renders harmless and stabilizes harm metals in the material with a synergistic effect of catalysis based on a substance contained in the incineration ash and far infrared electromagnetic waves to obtain a recycled material, the far infrared radiation catalytic reduction device being coupled with the secondary dryer through a screw conveyor with a duct that releases no harmful gas to the outside, configured capable of generating far infrared electromagnetic waves that are generated from heated ceramics, and that is supplied with the secondary-dried material, and further supplied with the incineration ash rendered harmless through the powder pulverizer, the raw material tank, and the secondary dryer, a product storage tank that stores the recycled material product, the product storage tank being coupled with the far infrared radiation catalytic reduction device through a water cooling conveyor, and discharges the same to the outside, and an exhaust gas treatment equipment capable of releasing exhaust gas to the outside and connected with the secondary dryer through an exhaust heat pipe.

### [Examples]

The system for recycling general waste, the method for recycling general waste, and the far infrared radiation catalytic reduction device used with the system for recycling general waste according to the Examples of the present invention will be described in detail with reference to the drawings.

### Example 1

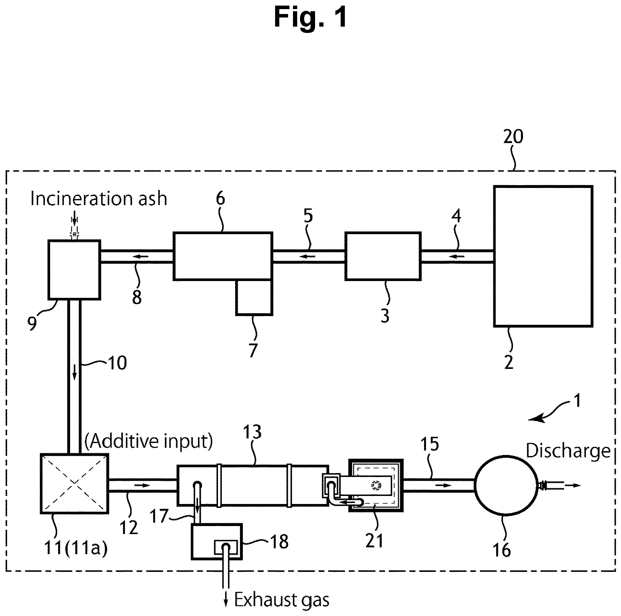

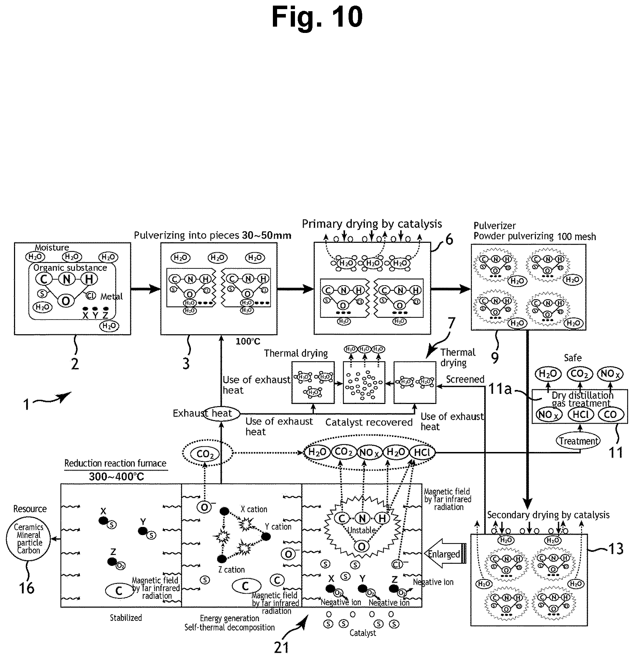

The system for recycling general waste 1 and the method for recycling general waste according to this Example will be described with reference to FIGS. 1, 2, and 10. FIG. 10 is an explanatory drawing of a treatment of recycled harmful substances by the system for recycling general waste according to Example 1 of the present invention, i.e., an explanatory drawing of the system for recycling general waste according to the far infrared radiation catalysis reduction reaction principle.

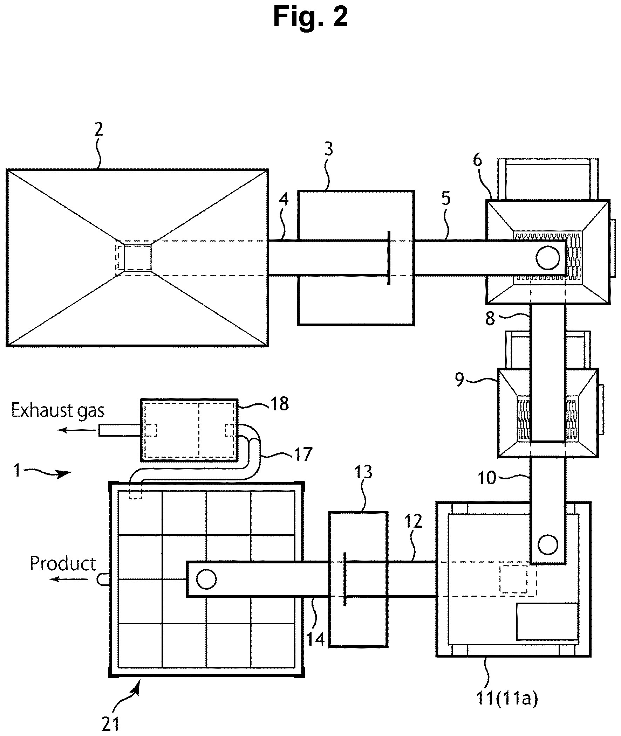

FIGS. 1 and 2 illustrate an overall schematic configuration sample and an overall schematic arrangement configuration sample of the system for recycling general waste 1 according to this Example 1, respectively.

Here, general waste refers to amorphous and heterogeneous substances composed of a mixture of incombustibles and combustibles having various moisture percentages such as man-made materials like plastics that don't decay in the ground in a landfill and make the ground permanently unstable, and synthetic substances that cause chemical changes in the ground and act as pollutants.

Also, general waste contains organochlorine plastics such as vinyl chloride, polyvinylidene chloride, chlorinated polyethylene, and organic halogen compounds, and incineration treatment thereof generates harmful substances such as mercury, dioxin, and hydrogen chloride, and harmful heavy metals that can be used as a catalyst.

The system for recycling general waste 1 according to this Example 1 is constructed inside of a building 20, for example.

The system for recycling general waste 1 is configured to include a to-be-treated material pit 2 configured to store, for example, 2400 m³ of general waste (to-be-treated material) sized for 4-day generation, a catalysis crusher 3 having a magnetic separator coupled with the to-be-treated material pit 2 through a screw conveyor with a duct 4 (a screw conveyor that is sealed not to release harmful gas to the outside; the same applies hereinafter), a primary dryer 6 coupled with the catalysis crusher 3 having the magnetic separator through a belt conveyor with a duct 5, and a vibration screen 7.

To the primary dryer 6 are added a catalyst of incineration ash rendered harmless and an additive such as sulfide, which will be stirred by a stirrer.

In addition, the primary dryer 6 and the vibration screen 7 are connected by a screw conveyor with a duct (not shown), and the vibration screen 7 is configured to screen the catalyst and the additive for use by drying again.

The system for recycling general waste 1 according to this Example 1 further includes a powder pulverizer 9 connected with the primary dryer 6 through a screw conveyor with a duct 8, a raw material tank 11 connected with the powder pulverizer 9 through a screw conveyor with a duct 10, a secondary dryer (rotary dryer) 13 connected with the raw material tank 11 through a screw conveyor with a duct 12, a far infrared radiation catalytic reduction device 21 connected with the secondary dryer 13 through a screw conveyor with a duct 14 (described in detail later), a product storage tank 16 that stores a product connected with the far infrared radiation catalytic reduction device 21 through a water cooling conveyor 15 and discharges the same to the outside, and an exhaust gas treatment equipment 18 capable of releasing exhaust gas to the outside and connected with the secondary dryer 13 through an exhaust heat pipe 17.

Into the powder pulverizer 9 is input incineration ash by rendering harmless harm metals to obtain a catalyst, and the incineration ash is fed into the secondary dryer 13 and further into the far infrared radiation catalytic reduction device 21 through the screw conveyor with a duct 10 and the raw material tank 11.

The method for recycling general waste according to the above-mentioned system for recycling general waste 1, as illustrated in FIG. 10, is achieved as follows. A crushed product in the general waste containing organic carbon C, nitrogen N, hydrogen H, oxygen O, sulfur S and moisture (H2O) and a plurality of metals X, Y, and Z input into the to-be-treated material pit 2 and a non-crushed product (material that requires no crushing) are pulverized into pieces from the screw conveyor with a duct 4 through the catalysis crusher 3 without being sorted, with the crushed product being pulverized into pieces with a size of 30 to 50 mm.

In this case, the material that requires no crushing (non-crushed product) passes through the catalysis crusher 3 without any treatment, and the amount of the material to be crushed in the catalysis crusher 3 decreases.

The to-be-treated material that has been pulverized into pieces (crushed product and non-crushed product) are supplied to the primary dryer 6 through the belt conveyor with a duct 5, where a catalyst and an additive are added and stirred, and dried in this state such that the water content is approx. 20 %.

Such a dried material is supplied to the powder pulverizer 9 through the screw conveyor with a duct 8, and the to-be-treated material (crushed product) is pulverized with reduced density, e.g., equalized with a size of about 100 to 150 mesh.

Also, the incineration ash rendered harmless is input into the powder pulverizer 9 in order to obtain a catalyst that is used in a later-described far infrared radiation catalytic reduction device 21.

Next, the powder-pulverized material (i.e., harm metals contained in the pulverized material and incineration ash) is supplied to the raw material tank 11 having a ceramics filter 11a through the screw conveyor with a duct 10 to remove moisture (H2O) and further to be supplied to the secondary dryer 13 through the screw conveyor with a duct 12.

In the secondary dryer 13, the material is dehydrated by the catalyst of the incineration ash rendered harmless with a water content of 10% or less for further volume reduction.

The secondary-dried material is supplied to the far infrared radiation catalytic reduction device 21 through the belt conveyor with a duct 14, where by using electromagnetic waves generated from ceramics such as alumina contained in the refractory bricks 31a provided in the far infrared radiation catalytic reduction device 21, a synergistic effect of catalysis obtained from the incineration ash and the electromagnetic waves is provided in the atmosphere in oxygen-free state or reduced oxygen state, crystals such as harm metals are decomposed for several seconds for stabilization (conversion of carbon C into carbon dioxide CO₂, conversion of hydrogen H into H₂O, conversion of nitrogen N into NOX), and further a plurality of metals such as X, Y, and Z is ionized and then their reaction with sulfide (S) as an additive renders harmless and stabilizes the material to recycle the same, convert harmful substances into ceramics, mineral particles and a carbon precursor and so on to obtain a recycled material.

Thereafter, the recycled material is fed as a product into the product storage tank 16 through the water cooling conveyor 15 and discharged.

In addition, the heat generated by operating the above-mentioned secondary dryer 13 is fed into the exhaust gas treatment equipment 18 through the exhaust heat pipe 17, and after the temperature is controlled as needed, the heat is supplied to an exhaust heat consumption source such as the vibration screen 7 (use of exhaust heat).

Further, the heat generated by operating the far infrared radiation catalytic reduction device 21 is also supplied to an exhaust heat consumption source such as the primary dryer 6 and the vibration screen 7 (use of exhaust heat).

As described above, the method for recycling general waste according to this Example 1 includes a pretreatment step for reducing the volume of the to-be-treated material to the minimum level by dehydration, primary-drying, crushing, pulverizing, and secondary-drying by using a catalyst of incineration ash rendered harmless and a step for recycling the material by allowing the far infrared radiation catalytic reduction device 21 to render harmless and stabilize harm metals.

In addition, the system for recycling general waste 1 and the method for recycling general waste of this Example 1 provide universal treatment and recycling capabilities.

Namely, when the to-be-treated material is input into the far infrared radiation catalytic reduction device 21, all combustible materials can cause a similar reaction due to the equalized reaction surface provided by controlling the particle size.

As described above, the particle size of such combustible materials is controlled from about 100 to 150 mesh in the pretreatment step to instantly perform molecule decomposition and highly activate a chemical reaction.

For example, the pretreatment step increases the number of metal elements contained in general waste to approx. 30. On the other hand, its waste plastic includes about 4 elements.

Further, it shall be noted that pretreatment steps are performed in a different order, depending on the type of to-be-treated material, and additional apparatuses may be used because sludge requires more drying energy in view of the number of elements contained therein.

The system for recycling general waste 1 according to this Example 1 was found to be excellent all in that plant expenses are low at one fifth, the energy consumption at a half, maintenance costs at one fifth, and carbon dioxide emissions at one hundredth, compared to existing facilities.

### Example 2

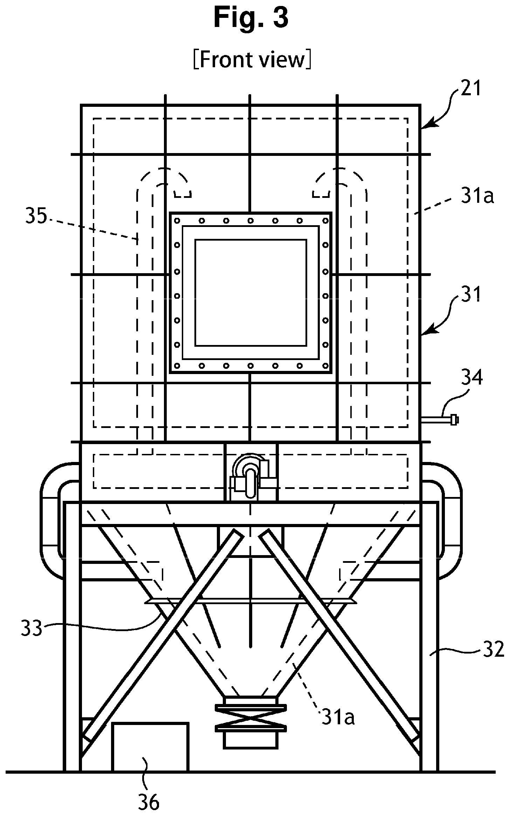

Subsequently, a specific configuration of a far infrared radiation catalytic reduction device 21 used with the system for recycling general waste 1 according to Example 2 of the present invention will be described with reference to FIGS. 3 to 9.

The far infrared radiation catalytic reduction device 21, as illustrated in FIG. 3, includes a far infrared radiation catalytic reduction device main body 31 that has refractory bricks 31a containing ceramics such as alumina laid throughout an inner wall thereof, a base 32 that supports the far infrared radiation catalytic reduction device main body 31, a discharge hopper 33 that is disposed within the base 32, has refractory bricks 31a containing ceramics laid throughout an inner wall thereof, and is configured to discharge the far infrared radiation catalysis reduced material from the bottom, an air pipe 34 for keeping the temperature within the far infrared radiation catalytic reduction device main body 31, an exhaust gas recirculation pipe 35 for refluxing exhaust gas in between the far infrared radiation catalytic reduction device main body 31 and the discharge hopper 33, and a heating burner 36 that heats the refractory bricks to generate far infrared radiation.

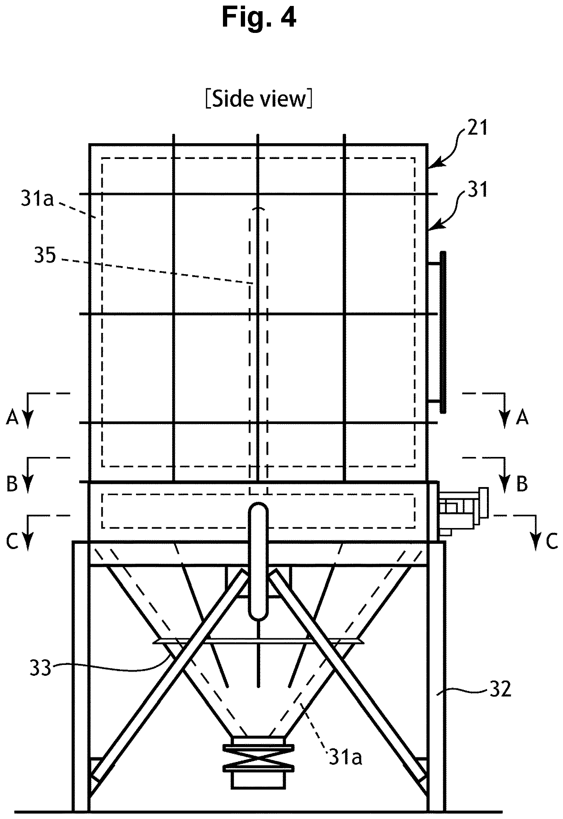

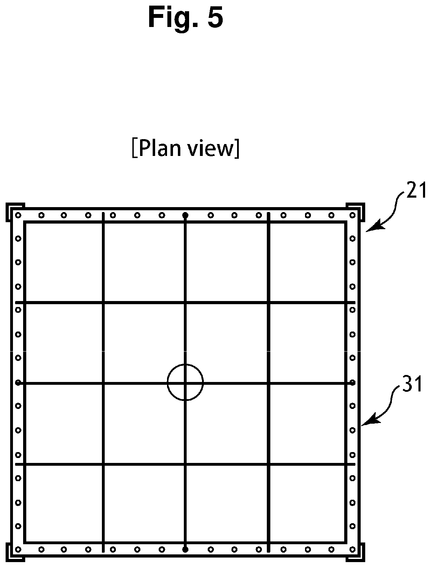

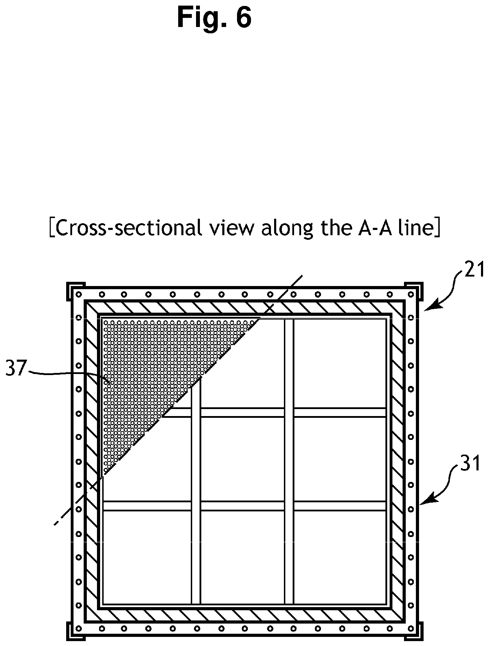

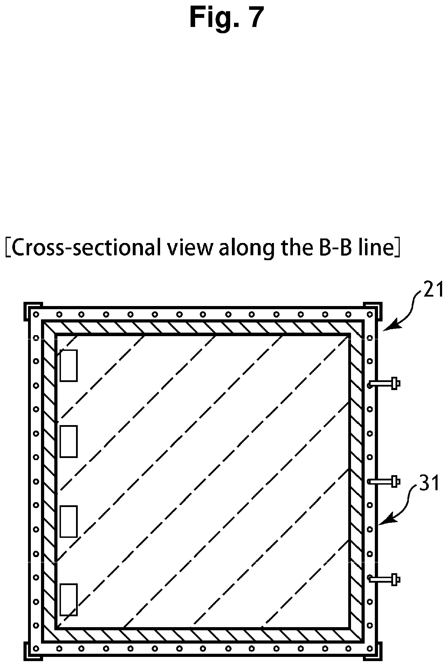

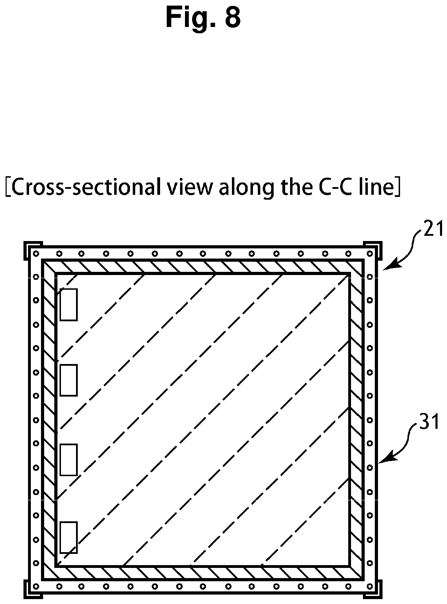

FIG. 4 is a side view of the far infrared radiation catalytic reduction device 21; FIG. 5 is a plan view of the far infrared radiation catalytic reduction device 21; FIG. 6 is a cross-sectional view along the A - A line of FIG. 4; FIG. 7 is a cross-sectional view along the B - B line of FIG. 4; and FIG. 8 is a cross-sectional view along the C - C line of FIG. 4.

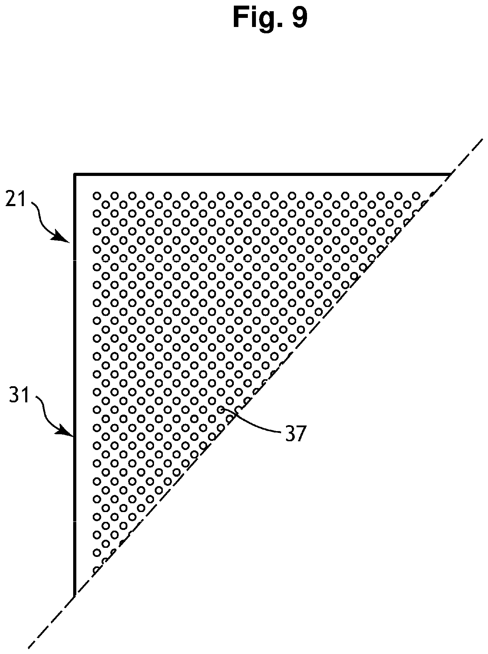

A punching metal plate 37 that functions as a filter, as enlarged in FIG. 9, is horizontally arranged inside of the far infrared radiation catalytic reduction device main body 31 in the far infrared radiation catalytic reduction device 21.

Next, an operational theory of the far infrared radiation catalytic reduction device 21 will be described in detail.

The way harm metals or the like are rendered harmless and stabilized by the far infrared radiation catalytic reduction device 21 according to this Example 2 is described as above. Specifically, in the far infrared radiation catalytic reduction device 21 according to this Example 2, using electromagnetic waves generated from ceramics together with a catalyst of incineration ash rendered harmless, a synergistic effect of catalysis and the electromagnetic waves is provided in the atmosphere in oxygen-free state or reduced oxygen state in the electromagnetic field to obtain a product rendered harmless and stabilized for several seconds.

The far infrared radiation is an electromagnetic wave, referring to a wave formed by electric fields alternated by magnetic fields. The infrared radiation has a wavelength range of 0.75 to 1000 µm, and the far infrared radiation has a wavelength range of 3 to 1000 (µm) therein. The wavelength range of electromagnetic wave corresponds to a temperature of 270 to 450 °C.

Ceramics, when heated, irradiates electromagnetic waves having a wavelength of 3 to 30 µm (far infrared radiation) at a temperature of approx. 200 to 600 °C.

The wavelength range of electromagnetic wave (far infrared radiation) is likely to be absorbed by many substances (except metals), and the far infrared radiation is absorbed by carbon dioxide CO₂ or moisture H₂O.

Namely, the infrared radiation, with heating action, provides kinetic energy for a molecule of a substance having electrical polarity (water molecule) to impart vibrational energy to the molecule to be excited.

The molecule of the substance provided with far infrared radiation energy is accelerated to hit other molecules, resulting in heat. In fact, the far infrared radiation itself is not in the form of heat, but an electromagnetic wave that allows the molecule to self-heat.

The far infrared radiation is likely to be absorbed by organic substances, and as the resulting heat, the far infrared radiation is distributed to the substance deeply to heat the inside thereof.

Ceramics heating is a common method to artificially produce far infrared radiations, and alumina-based or zirconium-based ceramics is often used.

Alumina (Al₂O₃)-based ceramics is an effective material. Alumina, which is an ionic crystalline composed of Al³⁺ and O²⁻, has several types of modifications, but in this case, α-Al₂O₃ is used that is resistant to higher temperatures than the type γ used for catalysis.

According to ceramics property measurements, for example, the thermal conductivity at 1100 °C (hot wire method) and the coefficient of thermal expansion at 1180 °C are favorable. Alumina is referred to as a typical ceramics material due to its strong chemical bond, having extremely high chemical and physical stability, heat resistance (melting point = 2050 °C) and corrosion resistance.

In a far infrared radiation catalyst reduction treatment by the far infrared radiation catalytic reduction device 21 of this Example 2, a catalyst is used at a low temperature of 400 °C or less for reduction in an oxygen-free or reduced oxygen space. An atmosphere is produced in which a catalyst is prepared not only by thermal decomposition but also by rendering harmless metals contained in incineration ash, and reduction is also performed by the catalyst in reduced oxygen state to sufficiently cause a chemical reaction at a temperature of 400 °C or less to successfully obtain a stable metal compound.

Once all metal compounds contained in the incineration ash become stable water-insoluble substances, the incineration ash is rendered harmless.

The incineration ash is a substance obtained by converting organic substances containing elements into inorganic substances (likely to be heated and reduced in volume), all composed of small particles such as an atom, a molecule, and an ion. A molecule is composed of an atom or atoms, and an ion or ions is/are an electrically charged atom or a group of atoms, as shown in Na⁺, Cl⁻, NH₄⁺, and NO₃⁻.

As described above, any particle that constitutes a substance is based on an atom.

An atom includes an electron or electrons orbiting on K-shell, L-shell, or M-shell, and when each shell orbit is filled with electrons, the element is stable. Chemical properties of atoms change periodically, depending on the number of electrons that connect atoms, and become stable.

The incineration ash contains 30 or more metal elements including trace elements. Metals in the incineration ash also have valence electrons for interacting with other metals, which may be gained, lost, or shared to make the configuration of electrons stable.

In addition, in order for metal atoms to be stable, each atom's free electrons form an aggregate, and the resulting orbits overlapped by electron waves (an electron has wave nature) allow an electron to move around in a cloudy space, and as the interatomic distance becomes smaller by gravitation, cations of each atom get closer, resulting in repulsion between the cations.

The energy from the resulting repulsion involves atomic bonding and it is converted into bonding energy to provide an aggregate and form crystal structures. However, each structure varies, in which not all atoms are readily arranged orderly.

What further promotes these reactions by catalysis is the operational theory of the far infrared radiation catalytic reduction device 21 of this Example 2.

Substances serving as a catalyst can be in any form of gas, liquid, or solid, and a plurality of metal substances in the incineration ash can be rendered harmless to obtain such a catalyst.

The catalyst refined from such incineration ash is a super-granular material containing metal catalysts such as Fe, and Ni, semiconductor oxides such as NiO, ZnO, MnO₂, CrO₂, V₂O₅, and TiO₂, oxides such as Al₂O₃, SiO₂, and MgO, and sulfide such as sulfur.

Also, the gases generated in the far infrared radiation catalytic reduction device 21 are products in various chemical reactions, as shown in the following chemical equation 1.

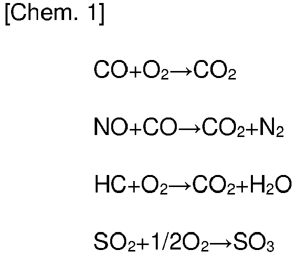

In each of the reactions, harmful gases are decomposed and discharged. Materials that are in contact with the catalyst are sterilized if they are bacteria, and dead objects are also decomposed. Rendering harmless incineration ash means molecule recombination. The use of inexhaustible catalysts requires no catalyst immobilization (while incineration ash exists), and catalysts themselves can be utilized as a resource after a chemical reaction.

Using a reducing atmosphere at low temperature and by catalysis, electromagnetic waves are generated to render harmless dioxins and heavy metals, and a catalyst synergistically uses light speed to enhance a reaction.

As mentioned above, metals contained in incineration ash rendered harmless serve as a catalyst, and have an effect capable of use as an inexpensive resource with a synergistic effect with far infrared electromagnetic waves to enhance a reaction.

Further, regarding such incineration ash rendered harmless, the incineration ash contains an aggregate of metal crystals having a solid surface that act as a metal catalyst resource.

The predominant element that constitutes the crust 1600 m deep underground is oxygen, accounting for 46.6 % of all elements in terms of % by weight.

The second dominant element is silicon (27.7 %), followed by aluminum (8.13 %), which are major silicate constituent elements. All the remaining elements are silicate constituent elements such as iron, calcium, sodium, potassium, magnesium, phosphorous, and manganese. These 10 dominant elements account for 98.6 % of all the constituent elements.

Metals have their own unique properties underground, forming compounds with such elements as oxygen, phosphorous, sulfur, hydrogen, and carbon.

Illustrative examples of the compounds include sulfide, oxide, hydroxide, halide, carbonate, sulfate, nitrate, phosphate, arsenate, borate, and silicate.

All these compounds are ionic compounds, but some of them have properties as covalent compounds.

These inorganic compounds have their own properties, and form compounds depending on the affinity. Namely, such inorganic compounds are stable as poorly-soluble compounds that are water-insoluble.

The incineration ash is a residue after incinerating various types of materials, and such materials are composed of various elements, and incineration causes such elements to stay in the ash.

According to a property measurement for the incineration ash as the residue, however, about 25 elements, but not other trace elements reflect measured values, and about 30 elements are confirmed as constituents.

These metal elements are all converted, by incineration, into oxide or chloride, and water-soluble and unstable metal compounds. Most of such unstable metals are heavy metals, and these heavy metals are stable as compounds with sulfur.

Stable metals are useful as a metal resource, and act as a catalyst or zeolite.

Also, illustrative examples of ceramics' physical properties include the melting point, and as the crystal temperature rises, the atom's lattice vibration width increases to thermally expand the crystal.

When the lattice vibration width reaches the critical value, regular crystal atomic arrangement cannot be maintained, and the resulting cohering substance is a liquid due to weak bonding force in an atom or a molecule therein. Although the liquid structure is not identified, a chemical bond is generally regarded as a crucial factor for the melting point, which can be high in the order from molecule crystal, metal crystal, ion crystal, to covalent crystal.

Thermal excitation of electron and lattice vibration cause thermal absorption to allow a substance to absorb thermal energy and raise the temperature. While ceramics generally has high heat absorptivity by lattice vibration, strength deterioration in thermal shock fracture by thermal shock cannot be measured as a coefficient.

Nevertheless, since the temperature range in this Example 2 is 400 °C or less, crystal fracture is not a possible phenomenon, but velocity energy by light speed allows a photon as a quantum-based elementary particle to have destructive force.

In the far infrared radiation catalytic reduction device 21 in this Example 2, the refractory bricks 31a containing ceramics are prepared, so that the generating temperature of far infrared radiation is in the range of 270 to 400 °C. Therefore, the generating temperature of the far infrared radiation is regarded as sufficient, but it was confirmed that the generating temperature of the far infrared radiation was raised up to 600 °C, and no significant changes were found in this case.

The treatment capacity of the far infrared radiation catalytic reduction device 21 is 7.5 m³, assuming the treatment volume is 8 m³ determined by length 2 m × width 2 m × height 2 m, and 93 % thereof is used except for internally laminated ceramics. This means that about 7.5 m³ of a to-be-treated material can be treated for an hour. Namely, the maximum amount of 180 m³ of a to-be-treated material can be treated for 24 hours (daily amount to be treated: 7.5 m³ × 24/1 = 180 m³).

A pretreatment of 500 m³ (100 t of weight with a specific gravity of 0.2) of general waste in a pretreatment step will remove the moisture to reduce the volume to about 165 m³, which is shown within the range of the daily amount to be treated of 180 m³.

Next, the far infrared radiation catalytic reduction device 21 will be described as a whole.

The far infrared radiation catalytic reduction device 21 is a device that enhances a chemical reaction by an infrared radiation treatment at 400 °C or less in reduced oxygen atmosphere and renders harmless the material to be input by stirring a catalyst and an additive in a step for treating the same at low temperatures.

A combination of pretreatment step and to-be-treated material, depending on the properties of each material, can treat various types of to-be-treated materials in a flexible manner.

In addition, in order to remove harmful gas generated by treating organic substances, a conveying method using a screw conveyor having a sealed duct used in all the steps is introduced to discharge the substances to the outside after rendering harmless the same.

Therefore, no harmful gas is generated outside. It is further advantageous that generated heat can be recycled to reduce running costs, and can be used as dried heat.

### Industrial applicability

The system for recycling general waste according to the present invention can extremely widely be used in the fields of disposal of industrial waste and general household garbage, rendering harmless such waste, and reformulation of acid soil.

### Description of reference numerals

1 System for recycling general waste
2 To-be-treated material pit
3 Catalysis crusher
4 Screw conveyor with a duct
5 Screw conveyor with a duct
6 Primary dryer
7 Vibration screen
8 Screw conveyor with a duct
9 Powder pulverizer
10 Screw conveyor with a duct
11 Raw material tank
11a Ceramics filter
12 Screw conveyor with a duct
13 Secondary dryer
14 Screw conveyor with a duct
15 Water cooling conveyor
16 Product storage tank
17 Exhaust heat pipe
18 Exhaust gas treatment equipment
20 Building
21 Far infrared radiation catalytic reduction device
31 Far infrared radiation catalytic reduction device main body
31a Refractory brick
32 Base
33 Discharge hopper
34 Air pipe
35 Exhaust gas recirculation pipe
36 Heating burner
37 Punching metal plate

## Claims

1. A system for recycling general waste containing waste plastic as a to-be-treated material, comprising:
a to-be-treated material pit that stores a to-be-treated material;
a catalysis crusher that crushes, on the basis of catalyst addition, part of the material from the to-be-treated material pit;
a primary dryer that performs primary-drying of the material supplied from the catalysis crusher to reduce the volume;
a powder pulverizer that pulverizes part of the primary-dried material, and allows incineration ash rendered harmless to be input thereinto;
a raw material tank that stores the powder-pulverized material;
a secondary dryer that performs secondary-drying of the material from the raw material tank to further reduce the volume; and
a far infrared radiation catalytic reduction device that is configured capable of generating far infrared electromagnetic waves that are generated from heated ceramics, and that is supplied with the secondary-dried material, and is further supplied with the incineration ash rendered harmless through the powder pulverizer, the raw material tank, and the secondary dryer, and that renders harmless and stabilizes harm metals in the material with a synergistic effect of catalysis based on a substance contained in the incineration ash and the far infrared electromagnetic waves to obtain a recycled material.

2. A system for recycling general waste containing waste plastic as a to-be-treated material, comprising:
a to-be-treated material pit that stores a to-be-treated material;
a catalysis crusher having a magnetic separator that crushes, on the basis of catalyst addition, part of the material, the catalysis crusher being coupled with the to-be-treated material pit through a screw conveyor with a duct that releases no harmful gas to the outside;
a primary dryer that performs primary-drying of the material supplied from the catalysis crusher to reduce the volume, the primary dryer being coupled with the catalysis crusher through a screw conveyor with a duct that releases no harmful gas to the outside;
a powder pulverizer that pulverizes part of the primary-dried material, the powder pulverizer being coupled with the primary dryer through a screw conveyor with a duct that releases no harmful gas to the outside, and allows incineration ash rendered harmless to be input thereinto;
a raw material tank that stores the pulverized material, the raw material tank being coupled with the powder pulverizer through a screw conveyor with a duct that releases no harmful gas to the outside;
a secondary dryer that performs secondary-drying of the material from the raw material tank to further reduce the volume, the secondary dryer being coupled with the raw material tank through a screw conveyor with a duct that releases no harmful gas to the outside;
a far infrared radiation catalytic reduction device that renders harmless and stabilizes harm metals in the material with a synergistic effect of catalysis based on a substance contained in the incineration ash and far infrared electromagnetic waves to obtain a recycled material, the far infrared radiation catalytic reduction device being coupled with the secondary dryer through a screw conveyor with a duct that releases no harmful gas to the outside, configured capable of generating the far infrared electromagnetic waves that are generated from heated ceramics, and that is supplied with the secondary-dried material, and is further supplied with the incineration ash rendered harmless through the powder pulverizer, the raw material tank, and the secondary dryer;
a product storage tank that stores a recycled material product, the product storage tank being coupled with the far infrared radiation catalytic reduction device through a water cooling conveyor, and discharges the same to the outside; and
an exhaust gas treatment equipment capable of releasing exhaust gas to the outside and connected with the secondary dryer through an exhaust heat pipe.

3. The system for recycling general waste according to claim 1 or 2, wherein the heat generated by a treatment in the far infrared radiation catalytic reduction device is used as exhaust heat for the primary dryer.

4. The system for recycling general waste according to any one of claims 1 to 3, wherein the catalyst used in the far infrared radiation catalytic reduction device is a metal catalyst obtained from incineration ash rendered harmless to be input into the powder pulverizer, a semiconductor oxide catalyst, an oxide catalyst, or a sulfide catalyst.

5. A method for recycling general waste, comprising:
a pretreatment step for significantly reducing the volume of a to-be-treated material composed of general waste including waste plastic by primary-drying, crushing, pulverizing, and secondary-drying the material using catalysis, and conveying incineration ash rendered harmless; and
a recycling step for, in a far infrared radiation catalytic reduction device that deals with the pretreated material, rendering harmless and stabilizing harm metals with a synergistic effect of catalysis based on the incineration ash and far infrared electromagnetic waves that are generated from ceramics to obtain a recycled material.

6. The method for recycling general waste according to claim 5, wherein the catalyst used in the recycling step is a metal catalyst obtained from incineration ash rendered harmless to be input at the stage of the pretreatment step, a semiconductor oxide catalyst, an oxide catalyst, or a sulfide catalyst.

7. A far infrared radiation catalytic reduction device used with a system for recycling general waste that, on the basis of a to-be-treated material that has undergone the pretreatment step for significantly reducing the volume of the material composed of general waste including waste plastic by primary-drying, crushing, pulverizing, and secondary-drying the material, and conveying incineration ash rendered harmless, renders harmless and stabilizes harm metals with a synergistic effect of catalysis and far infrared electromagnetic waves generated from ceramics to obtain a recycled material, the device including:
a far infrared radiation catalytic reduction device main body that has refractory bricks containing ceramics such as alumina laid throughout an inner wall thereof;
a base that supports the far infrared radiation catalytic reduction device main body; and
a discharge hopper that is disposed within the base, has refractory bricks containing ceramics laid throughout an inner wall thereof, and is configured to discharge the far infrared radiation catalysis reduced material from the bottom, wherein
the refractory bricks are heated to generate far infrared radiation from the heated ceramics.

8. The far infrared radiation catalytic reduction device used with a system for recycling general waste according to claim 7, wherein the catalyst used is a metal catalyst obtained from incineration ash rendered harmless, a semiconductor oxide catalyst, an oxide catalyst, or a sulfide catalyst.
